# EUROPEAN PATENT SPECIFICATION

(11) **EP 2 746 639 B1**
(45) Date of publication and mention of the grant of the patent: **11.01.2017**
(21) Application number: 12466025.9
(22) Date of filing: 21.12.2012
(51) Int. Cl.: F16L 59/07, F16L 9/18, F16L 55/033, B21C 37/15

(54) **Noise reducing piping**
Rauschreduzierendes Leitungssystem
Tuyauterie de réduction de bruit

(43) Date of publication of application: 25.06.2014
(73) Proprietor: Valeo Vymeniky Tepla k.s., 267 53 Zebrák (CZ)
(72) Inventor: Forst, Jan, 323 00 Plzen (CZ); Barna, Vladimir, 266 01 Beroun (CZ)
(74) Representative: Havlík, Michal

(56) References cited:
- DE-A1- 19 511 970
- US-A- 3 133 612
- US-A- 5 170 557
- US-A- 5 189 790
- US-A- 5 996 643

## Description

The invention relates to an air conditioning system comprising a piping for a coolant circuit.

Air conditioning systems comprise a closed cooling circuit in order to accomplish the necessary heat transfer. The coolant flow inside the coolant circuit is regulated by valves, especially a thermal expansion valve. The regulation leads to unsteady coolant flow and pulsations of the coolant throughout the piping. In operating mode of the evaporator, the vaporization and coolant flow change create pulsations of evaporating coolant, such pulsations being transferred to the pipe which respond with its natural frequency and transfers the noise farther. The pulsation causes vibrations of the piping itself, which are perceived as noise. Especially in automotive air conditioning systems, the noise is transferred into the passenger cabin, limiting the passengers' comfort. In order to increase the comfort of the passengers, a noise reducing piping is being used. It is known in the prior art to use special damping materials, for example rubber foam, TPE or other plastic materials. The materials are applied on the outside wall of the pipe and surround the pipe completely to suppress vibrations. Noise reducing pipings of this type suffer from high manufacturing costs, high weight, large dimensions and problems during recycling.

A piping for an air conditioning system is shown in DE19511970.

An object of the invention is to provide an air conditioning system comprising a piping which does not emit much noise and which can be manufactured with low manufacturing costs and with a small diameter.

In accordance with the invention a piping for a coolant circuit comprising an inner pipe and an outer pipe is provided. The inner pipe carries the coolant and at least a part of it is surrounded by the outer pipe in a way that an air gap between the inner pipe's outer radius and the outer pipe's inner radius is present. A piping with two distinct pipes suppresses the vibration excited by pulsations of the coolant due to the fact that the two pipes have different resonance frequencies. The two pipes together form a vibrational system with a resonance frequency that differs significantly from the one of a single pipe. Therefore, vibrations in the whole piping are less likely to be excited, thus the piping emits less noise.

Furthermore, the air gap between the two pipes acts as an insulation layer for the inner pipe carrying the coolant.

For example the air gap is at least 0.2 mm thus allowing small dimensions of the piping.

Preferably, the ends of the outer pipe are open. This way no additional efforts have to be taken to close the pipes.

The piping includes at least one bend and the outer pipe contacts the inner pipe in the region of the bend such that a large contact area is provided.

The outer pipe is fixed to the inner pipe by the contact made in the region of the bend, rendering further connecting means unnecessary.

In a preferred embodiment of the invention the inner pipe and the outer pipe have different wall thicknesses, leading to different resonance frequencies, which in turn reinforce the suppression of the vibrations.

In a preferred embodiment the inner pipe and the outer pipe are made out of the same material, in particular aluminum, which reduces production costs and simplifies the bending process of the piping.

In another embodiment of the invention the outer pipe surrounds the inner pipe over at least 55 % of the inner pipe's length. This way the shift of the resonance frequency is large enough to significantly reduce the amount of emitted noise.

In another preferred embodiment no additional thermal insulation is used, because the air gap already provides a sufficient thermal insulation for the inner pipe.

According to a further embodiment of the invention the piping connects a thermal expansion valve with an evaporator of an air conditioning system. Because the pulsations of the coolant originate from the thermal expansion valve, the piping connected directly to the thermal expansion valve can efficiently reduce the noise emitted of the system.

Further is presented a method for manufacturing a piping comprising the steps of inserting an inner pipe into an outer pipe and bending the two pipes to achieve a positive fit of the pipes, which is a very cost efficient way of fabricating a noise reducing piping.

Preferably, the outer pipe is held in its position relative to the inner pipe during the fabrication by the tool used to bend the pipes.

Further features and advantages of the invention will be apparent from the following description of the embodiments and the attached drawings to which reference is made and in which:
- Figure 1 shows two pipings according to the present invention and
- Figure 2 is part of a cross-sectional view through one of the pipings of Figure 1 along line II - II.

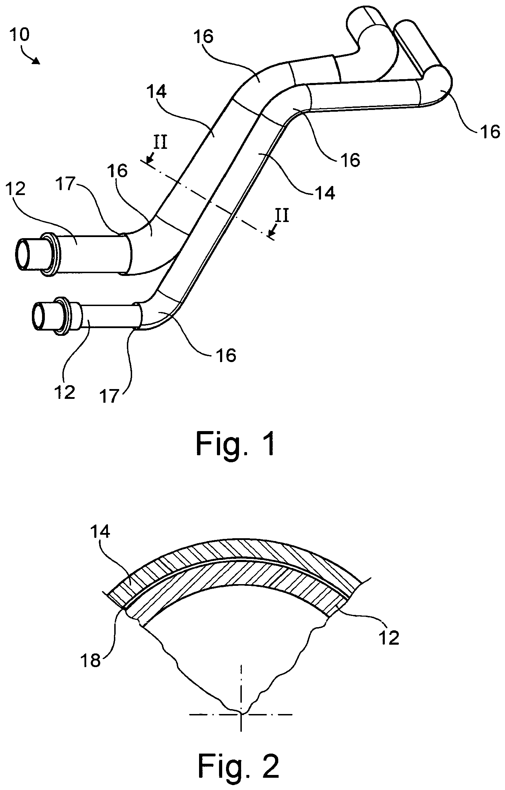

Figure 1 shows two pipings 10 which connect, a thermal expansion valve (not shown) with an evaporator (not shown). For this purpose, one of the pipes provides a coolant flow to the evaporator, and the other one carries the coolant flowing away from the evaporator. In the shown embodiment, the outlet pipe has a larger diameter than the inlet pipe.

Both pipings 10 comprise an inner pipe 12 and an outer pipe 14. The outer pipe 14 surrounds the inner pipe 12 over the majority, preferably over at least 55%, of the inner pipe's length and has a wall thickness different from that of inner pipe 12. Each piping 10 has several bends 16 at which the inner pipe 12 and the outer pipe 14 come in contact with each other, whereas ends 17 of outer pipe 14 do not necessarily have contact to the inner pipe 12. Theoretically, the ends 17 form air gap 18 as well and do not contact the inner pipe 12. However, due to the elasticity of the material used, the ends 17 may reform after the bending process and establish contact with the inner pipe 12.

The cross-sectional view of the piping 10 shows the inner pipe 12 and the outer pipe 14. The two pipes have no connection and an air gap 18 is present between the inner pipe's outer radius and the outer pipe's inner radius, surrounding the inner pipe 12 completely.

The connections between the two pipes 12, 14, established in the bends 16, prohibit movement of the outer pipe 14 relative to the inner pipe 12 thus mechanically fixing the outer pipe 14 to the inner pipe 12.

During operation of the piping 10 a coolant flows through the inner pipe 12. The operation of the thermal expansion valve causes pulsations of the coolant which propagate into the inner pipe 12. Due to the fact that the inner pipe 12 and the outer pipe 14 form a vibrational system with a resonance frequency significantly distinct from the resonance frequency of the inner pipe 12 alone, the pulsations cannot excite vibrations of any of the pipes 12, 14. Therefore, no noise is emitted from the piping during operation of the coolant circuit.

Compared to a pipe surrounded by plastic foam, for a same effect as far as the reducing of noise, the diameter of the piping 10 is smaller.

Furthermore the air gap 18 and the outer pipe 14 provide thermal insulation of the inner pipe 12 and prevent condensation directly at the inner pipe 12. Only the moisture inside the air gap 18 can condensate.

Furthermore the air gap 18 can also be used for draining condensates coming directly from the evaporator. At least one of the ends 17 of the outer pipe 14 is arranged in an interior of a housing (no shown) surrounding the evaporator, the housing comprising a means for collecting condensates. This way, it is possible to easily drain condensates to the outside of the housing.

## Claims

1. A system comprising an air conditioning system having an evaporator, a thermal expansion valve and piping (10) for a coolant circuit, the piping (10) connecting the thermal expansion valve with the evaporator of the air conditioning system,
wherein the piping (10) for a coolant circuit comprises an inner pipe (12) and an outer pipe (14), wherein the inner pipe (12), in use, carries the coolant and the outer pipe (14) surrounds the inner pipe (12) at least partly in a way that an air gap (18) between the inner pipe's outer radius and the outer pipe's inner radius is present, the piping includes at least one bend (16), and that the outer pipe (14) contacts the inner pipe (12) in the region of the bend (16), the piping, in use, suppresses the vibration excited by pulsations of the coolant due to the fact that the two pipes (12, 14) have different resonance frequencies, the outer pipe (14) being fixed to the inner pipe (12) by the contact made in the region of the bend (16).

2. System according to claim 1, **characterized in that** the air gap (18) is at least 0.2 mm.

3. System according to claim 1 or 2, **characterized in that** the ends of the outer pipe (14) are open.

4. System according to any of the preceding claims, **characterized in that** the inner pipe (12) and the outer pipe (14) have different wall thicknesses.

5. System according to any of the preceding claims, **characterized in that** the inner pipe (12) and the outer pipe (14) are made out of the same material, in particular aluminum.

6. System according to any of the preceding claims, **characterized in that** the outer pipe (14) surrounds the inner pipe (12) over at least 55% of the inner pipe's length.

7. System according to any of the preceding claims, **characterized in that** no additional thermal insulation is used.

## Patentansprüche

1. System, das eine Klimaanlage umfasst, mit einem Verdampfer, einem thermischen Expansionsventil und einem Rohrsystem (10) für einen Kühlkreis, wobei das Rohrsystem (10) das thermische Expansionsventil mit dem Verdampfer der Klimaanlage verbindet,
wobei das Rohrsystem (10) für einen Kühlkreis ein inneres Rohr (12) und ein äußeres Rohr (14) umfasst, wobei das innere Rohr (12) im Gebrauch das Kühlmittel führt und das äußere Rohr (14) das innere Rohr (12) zumindest teilweise derart umgibt, dass ein Luftspalt (18) zwischen dem Außenradius des inneren Rohrs und dem Innenradius des äußeren Rohrs vorliegt, wobei das Rohrsystem mindestens ein Kniestück (16) umfasst und wobei das äußere Rohr (14) das innere Rohr (12) in dem Bereich des Kniestücks (16) berührt, wobei das Rohrsystem im Gebrauch aufgrund der Tatsache, dass die beiden Rohre (12, 14) unterschiedliche Resonanzfrequenzen aufweisen, die durch Pulsierungen des Kühlmittels angeregten Vibrationen dämpft, wobei das äußere Rohr (14) durch den in dem Bereich des Kniestücks (16) hergestellten Kontakt an dem inneren Rohr (12) fixiert ist.

2. System nach Anspruch 1, **dadurch gekennzeichnet, dass** der Luftspalt (18) mindestens 0,2 mm beträgt.

3. System nach Anspruch 1 oder 2, **dadurch gekennzeichnet, dass** die Enden des äußeren Rohrs (14) offen sind.

4. System nach einem der vorhergehenden Ansprüche, **dadurch gekennzeichnet, dass** das innere Rohr (12) und das äußere Rohr (14) verschiedene Wanddicken aufweisen.

5. System nach einem der vorhergehenden Ansprüche, **dadurch gekennzeichnet, dass** das innere Rohr (12) und das äußere Rohr (14) aus demselben Material, insbesondere Aluminium, hergestellt sind.

6. System nach einem der vorhergehenden Ansprüche, **dadurch gekennzeichnet, dass** das äußere Rohr (14) das innere Rohr (12) über mindestens 55 % der Länge des inneren Rohrs hinweg umgibt.

7. System nach einem der vorhergehenden Ansprüche, **dadurch gekennzeichnet, dass** keine zusätzliche Wärmeisolation verwendet wird.

## Revendications

1. Système comprenant un système de climatisation d'air présentant un évaporateur, une soupape de détente thermique et une tuyauterie (10) pour un circuit de refroidissement, la tuyauterie (10) reliant la soupape de détente thermique à l'évaporateur du système de climatisation d'air,
la tuyauterie (10) pour un circuit de refroidissement comprenant un tuyau interne (12) et un tuyau externe (14), le tuyau interne (12), pendant l'utilisation, portant le réfrigérant et le tuyau externe (14) entourant le tuyau interne (12) au moins en partie de manière à ce qu'un espace d'air (18) soit présent entre le rayon extérieur du tuyau interne et le rayon intérieur du tuyau externe, la tuyauterie comportant au moins un coude (16) et le tuyau externe (14) venant en contact avec le tuyau interne (12) dans la région du coude (16), la tuyauterie, pendant l'utilisation, supprimant les vibrations produites par des pulsations du réfrigérant dues au fait que les deux tuyaux (12, 14) ont des fréquences de résonance différentes, le tuyau externe (14) étant fixé au tuyau interne (12) par le contact établi dans la région du coude (16).

2. Système selon la revendication 1, **caractérisé en ce que** l'espace d'air (18) mesure au moins 0,2 mm.

3. Système selon la revendication 1 ou 2, **caractérisé en ce que** les extrémités du tuyau externe (14) sont ouvertes.

4. Système selon l'une quelconque des revendications précédentes, **caractérisé en ce que** le tuyau interne (12) et le tuyau externe (14) ont des épaisseurs de paroi différentes.

5. Système selon l'une quelconque des revendications précédentes, **caractérisé en ce que** le tuyau interne (12) et le tuyau externe (14) sont fabriqués à partir du même matériau, en particulier d'aluminium.

6. Système selon l'une quelconque des revendications précédentes, **caractérisé en ce que** le tuyau externe (14) entoure le tuyau interne (12) sur au moins 55 % de la longueur du tuyau interne.

7. Système selon l'une quelconque des revendications précédentes, **caractérisé en ce qu'**aucune autre isolation thermique n'est utilisée.
